# EUROPEAN PATENT APPLICATION

(11) **EP 2 952 315 A1**
(43) Date of publication of application: **09.12.2015**
(21) Application number: 14170790.1
(22) Date of filing: 02.06.2014
(51) Int. Cl.: B29C 33/00, B29D 99/00, B29C 33/50, B29C 70/44, B29C 70/54, B29L 31/08, B29L 31/30, B29L 31/00

(54) **A method for manufacturing a single- or multi-cell composite material structure**

(71) Applicant: Siemens Aktiengesellschaft, 80333 München (DE)
(72) Inventor: Nielsen, Per, 9310 Vodskov (DK); Torgard, Sigmund Wenningsted, 7000 Fredericia (DK)

(57) **Abstract**

The present invention relates to a method for manufacturing a single- or multi-cell composite material structure, the method comprising. At least one first composite fiber layer (101) is laid out on a first surface (102) of a first mould (103).

A holding layer (104) comprising a magnetic element (105) is laid out on the first composite fiber layer (101),
wherein the magnetic element (105) comprises a material which is susceptible to magnetic forces. A magnetic device (106) for generating a magnetic force acting onto the magnetic element (105) of the holding layer (104) is provided, wherein the magnetic device (106) is arranged with respect to the holding layer (104) such that a magnetic force generated by the magnetic device (106) presses the holding layer (104) against the first composite fiber layer (101) and the first surface (102) for holding the first composite fiber layer (101) on the first surface (102) during processing the first composite fiber layer (101) for forming the single- or multi-cell composite material structure.

## Description

### Field of invention

The present invention relates to a method for manufacturing a single- or multi-cell material structure. Especially, the invention relates to a method for forming a hollow body with one or more cells made of composite material, in particular for being used for wind turbine blades, naval structures, ship hulls, air frames or pressure vessels. Moreover, the present invention relates to an arrangement for manufacturing such a single- or multi-cell composite material structure.

### Art Background

Single- or multi-cell composite material structures become greater and greater, as wind turbine blades, ship hulls or air frames become greater and greater. In order to manufacture such big single- or multi-cell composite material structure several manufacturing methods are known in the art.

EP 2 116 359 B1 discloses a method for manufacturing wind turbine blades which comprises composite material. An inner mould and an outer mould are used in the method. At least a part of the surface of the inner mould comprises a compressible material being covered by an airtight membrane. The materials to be bonded are positioned in a mould cavity between an outer mould part and the inner mould part.

EP 1 310 351 B1 discloses a method for manufacturing blades for a wind turbine. A mould core is placed to a layer of glass fiber, which is laid in a mould part forming an underside of a blade. On top of the mould core, a further layer of glass fiber is laid. Finally, an upper mould part is laid over the mould core, so that the fiber layers, that are pressed to the mould core, form the profile of the blade.

EP 2 441 951 A1 discloses a method for forming a profile for a hollow component made of composite fibers. The first fiber layer and the collapsed inflatable bag are fixed to the first mould surface. The first mould surface is coupled to the second mould surface in such a way that the first mould surface and the second mould surface corresponds to the shape of the blade. The inflatable bag is inflated in such a way that the first composite layer is pressed against the first mould surface and the second composite fiber layer is pressed against the second mould surface.

EP 2 607 059 A1 discloses a method for manufacturing composite materials. A degradable membrane is used for fixing the composite materials in position. At least one reinforcement layer is laid on the surface of a mould and one degradable layer is laid on top of the at least one reinforcement layer. During curing of the injected resin a degradation of the degradable layer is initiated and performed.

### Summary of the Invention

It may be an object of the present invention to simplify a manufacturing method for single- and multi-cell composite material structures.

This object is solved by a method for forming a profile for manufacturing single- and multi-cell composite material structures and by an arrangement for manufacturing a single-or multi-cell composite material structure according to the independent claims.

According to a first aspect of the present invention, a method for manufacturing a single- or multi-cell composite material structure and an arrangement for manufacturing a single-or multi-cell composite material structure is disclosed. According to the method, at least one first composite fiber layer is laid out on a first surface of a first mould. A holding layer comprising a magnetic element is laid out on the first composite fiber layer, wherein the magnetic element comprises a material which is susceptible to magnetic forces. A magnetic device for generating a magnetic force which is acting onto the magnetic element of the holding layer is provided. The magnetic device is arranged with respect to the holding layer such that a magnetic force which is generated by the magnetic device presses the holding layer against the first composite fiber layer and the first surface for holding the first composite fiber layer on the first surface during processing the first composite fiber layer for forming the single- or multi-cell composite material structure. According to a further exemplary aspect of the present invention, an arrangement for applying the above mentioned method for the manufacturing of single-or multi-cell composite material structures is presented.

The first mould may be an upper mould and a second mould, which may be coupled to the first mould for forming a common closed mould, may be a lower mould. The first mould may comprise a first surface which may form one half of a female mould of a single- or multi-cell composite material structure. The lower second mould may form a second half of the female mould. The first composite fiber layer is laid out on the first surface of the first mould and may form the first section of a profile of the single- or multi-cell composite fiber structure. For example, when the first mould is an upper female mould of a blade which is to be built, the first composite fiber layer laid out on the first surface builds the upper outer surface and shape of the finished single- or multi-cell composite material structure (e.g. upper half of a wind turbine blade).

The composite fiber layer may be formed with composite fibers in a uni-directional orientation or multi-directional orientation with respect to each other. Moreover, the composite fibers may be provided in a web form, a woven form, such as a fiber mat, or a pre-preg. The first fiber layer may describe one or a plurality of fiber layers laid on top of each other which are located to the first mould. The composite fibers may comprise glass fibers, carbon fibers or other polymer fiber materials.

The holding layer may be formed flexible. The magnetic element may be for example a roller element, a tube, a spherical or a drop-shaped body. The magnetic element may also be incorporated into the holding layer. In this respect the magnetic element may be formed of magnetic fibers woven in the holding layer. Also the magnetic element comprises a material which is susceptible to magnetic forces. This may be for example a metal but also any other material which is susceptible to magnetic forces. Furthermore, the holding layer comprises a plurality of magnet elements which are e.g. arranged spaced apart from each other.

Moreover, also a plurality of first composite fiber layers may be arranged above each other. Furthermore, the plurality of first composite fiber layers may comprise different materials with respect to each other. Accordingly, a plurality of holding layers may be arranged above each other.

The magnetic device may be a device which can provide a magnetic force such as for example a permanent magnet or an electromagnet, such that the magnetic force of the magnetic device is activable and deactivable. That may ensure that the magnetic force is only provided when it is necessary, for example when the first mould is turned upside-down. The magnetic device may be arranged inside the first mould or outside of the first mould in such a way that the magnetic force acting on the holding layer acts in the way to press the holding layer against the first fiber layer.

By the present invention, a holding layer is fixed by magnetic forces and e.g. additionally by vacuum (i.e. underpressure as described further below) to the first mould in such a way that the first composite fiber layer is fixedly positioned in the first mould also during handling the first mould. After the first composite fiber layer is fixedly positioned in the first mould, a resin moulding process may be started for manufacturing a single- or multi-cell composite material structure. Further adhesive material for fixing the first composite fiber layer in the first mould is obsolete. Additionally, there is no need for applying e.g. a degradable membrane on top of the composite fiber layer to fix the composite fiber layer by degrading the degradable membrane.

The fixing of the first composite fiber layer is achieved according to the present invention by applying the magnetic force and vacuum onto the holding layer. Hence, when the first composite fiber layer is fixed to the first surface, the first mould may be handled very simple and no slipping and relative movement of the first composite fiber layer with respect to the first surface of the first mould is caused, because the first composite fiber layer is pressed on the first surface of the first mould by the magnetic force. For this reason, the first mould may be for example turned overhead without falling out of the first mould.

Hence, in contrast to conventional approaches, the composite fiber layer is not necessarily fixed to the first mould by glue, adhesive or by the use of a degradable membrane. There is the possibility that a rest of the glue or adhesive will be absorbed by the composite structure. This may have a negative influence on the strength and the quality of the structure. By the present invention, a quick fixation of the holding layer is achieved without the need of further adhesive, which is time-consuming. Furthermore, because the use of the degradable membrane is not mandatory, a chemical interaction between the first composite fibre layer and the degradable membrane is prevented.

Summarizing, by the present invention using a magnetical holding force and e.g. additionally by vaccum on the holding layers, there is no need for inserting any additional substances, so that there is no possibility for any residual material of e.g. the degradable membrane, the glue or the adhesive to affect the first composite fibre layer composite an hence to weaken the strength or the quality of the final composite material structure.

According to a further exemplary embodiment of the present invention, the holding layer is formed two-sided by having a first layer section, a second layer section and an interface section between the first layer section and the second layer section. The interface section forms a half-loop and the first layer section overlaps at least partially the second layer section. Hence, by the present exemplary embodiment the first layer section may be about the same size as the second layer section and overlaps the second layer section. The holding layer is folded at the interface section such as to form a folded holding layer. Additionally, the half-loop formed by the overlapping of the second layer section with the first layer section may provide the possibility that the holding layer is not folded in a way that the material of which the holding layer is destroyed by buckling the holding layer in a sharp edge.

According to a further exemplary embodiment, the magnetic element is arranged within the interface section, such that the interface section envelops partially the magnetic element when forming the half-loop. By arranging the magnetic element within the interface section, the magnetic element is held tight to the position and also the direct contact of the magnetic element with the first composite fiber layer is prevented. Hence, the risk of damaging the first composite fiber layer during a relative movement between the holding layer, magnetic element and the composite fiber layer is reduces significantly.

Furthermore, the magnetic element may be enveloped and i.e. arranged within the interface section such that a relative movement between the holding layer and the magnetic element.

According to a further exemplary embodiment, the magnetic element comprises a roller element. However, on other embodiments, the magnetic element may be a plate element, a grid element or a mat of magnetic fibers.

However, the roller element enables an easy movement relative to the holding layer. In other words, the rolling element may roll along the holding layer. The roller element may describe a cylindrical element which may have a circular base area and a wall extending from the base area in one dimension.

In another exemplary embodiment of the present invention, the first layer section of the holding layer is laid onto the first composite fiber layer. The second layer section of the holding layer is then at least partially laid out onto the first layer section. Hence, the holding layer is provided folded on top of the first composite fiber layer and may firmly hold the magnetic element in place and the magnetic force may hold the composite fiber layer firmly in place without a possibility for the first composite fiber layer to move relatively to the first surface of the first mould.

According to a further exemplary embodiment, the holding layer is removed by pulling the second layer section. Hence, by pulling the second layer section, the first layer section is unrolled and peeled off, respectively, from the first composite fiber layer. The interface section may still form the folding section of the holding layer, wherein during pulling the second section, the second section becomes large and the first layer section becomes smaller. The magnetic element (i.e. the roller element) may roll during pulling the second section along the holding layer and is still arranged within the interface section. Hence, the holding layer may be removed without any shear force acting onto the first composite fiber layer. Hence, there is no disruption of the composite fiber layer during the removing. Additionally the removing of the holding layer may be done without much effort due to the folded holding layer and the providing of the magnetic roller element.

According to a further embodiment of the present invention, at least on second composite fiber layer is laid out on a second surface of a second mould. Next, the first mould is turned upside-down while the magnetic device generates the magnetic force for holding the first composite fiber layer on the first surface. The first composite fiber layer comprises a first contact region and the second composite fiber layer comprises a second contact region. Subsequent to turning the first mould upside-down, the first mould and the second mould may be brought relatively together such that the first mould and the second mould envelope an inner volume. Additionally the first contact region contacts the second contact region. The second composite fiber layer may also consist of more than one layer and the different layers may be made of different materials.

The second composite fiber layer may be of the same structure as the first composite fiber layer as described above. But the second composite fiber layer may also be of any other structure or may comprise another number of layers or materials with respect to the first composite fiber layer. The second composite fiber layer is laid out on the second surface of the second mould and may form the second section of a profile of the single- or multi-cell composite fiber structure. For example when the second mould is a lower female mould of a wind turbine blade which is to be built, the second composite fiber layer laid out on the second surface builds the lower outer surface and shape of the finished single- or multi-cell composite material structure (e.g. lower half of the wind turbine blade). Hence, the assembling of the lower outer surface and the upper outer surface may result in the complete wind turbine blade to be provided.

The first contact region may be a region where a section of the first composite fiber layer contacts the second contact region of the second composite fiber layer. In other words, the first and second contact regions contact each other by overlapping each other, respectively. Hence, the first contact region and the second contact region provide a strong overlapping joint between the upper half and the lower half of the final blade. Additionally the strong overlapping joint may be used for example as a reinforced leading edge and/or trailing edge of the final blade.

The inner volume is enveloped by the first and second composite fiber layer and hence by the first mould and the second mould, respectively. The inner volume denotes a hollow region between the first composite fiber layer and the second composite fiber layer. The inner volume may be one large inner space or may be divided in several inner sub volumes which may be in the final blade filled with air.

According to a further exemplary embodiment, at least one separation element may be placed between the first surface and the second surface such that the inner volume may be separated by the separation element into a first sub volume and a second sub volume. The first sub volume forms a first cell and the second sub volume forms a second cell in the final composite material structure to be manufactured. Additionally further separation elements may be provided in the inner volume so that the further separation elements form a multi-cell configuration. Hence, the separation elements space the first composite fiber layer and the second composite fiber layer apart from each other. Additionally, after curing the composite fiber structure, the separation elements remain in the inner volume to reinforce the composite structure. Hence, the separation elements reinforce the composite structure against compressive forces acting from outside onto the composite structure.

In another exemplary embodiment of the present invention, an inner mould is placed inside the inner volume. The inner mould presses the first composite fiber layer against the first surface and the second composite fiber layer against the second surface, in particular after the first mould is coupled to the second mould. Hence, by the present exemplary embodiment the use of the inner mould eliminates the risk of forming crinkles and hollow regions within the composite material when the resin is accumulated. This means that the presence of the inner mould can enforce the strength and the quality of the final composite material structure considerably. The inner mould forms an airtight bag, so that no exchange of fluid from inside the inner mould to the inner volume occurs and vice versa. The fluid may be for example, air, water or resin.

According to a further exemplary embodiment, the holding layer is removed after the inner mould is placed inside the inner volume and the first mould and the second mould are brought together. Hence, the first composite fiber layer is held in each processing step either by the holding layer and/or the inner mould. The effect of this is that the risk of forming crinkles and hollow regions within the composite material, where the resin can be accumulated, is further reduced.

According to a further exemplary embodiment, the inner mould comprises a material block or an inflatable bag which is inflatable by injecting air inside the inflatable bag. The inner mould may be made of e.g. metal, plastic, rubber or stainless steel. Additionally the inflatable bag may be made of thin rubber, plastic or any other elastic and inflatable material which can be inflated by air.

Air is pumped into the inflatable bags after the first mould and the second mould are brought together. Air is pumped into the inflatable bags until the inflatable bags are expanded enough to support the weight of the composite material in the first mould.

Additionally or instead of using the inner mould, pressurized air may be injected inside the inner volume for pressing the respective composite fibre layers against the respective surfaces.

In another exemplary embodiment of the present invention, the first composite fiber layer is further pressed against the first surface by generating under pressure between the first composite fiber layer and the first surface. Hence, the generation of under pressure between the first composite fiber and the first surface is an additional possibility for reducing the risk of crinkles and hollow regions in the final composite material structure and an additional possibility of enforcing the final structure. The under pressure is generated by an air pump (i.e. a vacuum pump) which is connected to the first mould. The air pump may be any kind of pump which is able to evacuate air from a closed or sealed region.

According to another exemplary embodiment of the invention, the first mould comprises a first mounting section and the second mould comprises a second mounting section. The first mounting section and the second mounting section are formed such that the first mounting section faces the second mounting section when the first mould and the second mould are brought together relatively to each other. A seal element between the first mounting section and the second mounting section seals the inner volume from an environment of the closed mould.

The first mounting section is formed at the boundary edge areas of the first mould and the second mounting section at the boundary edge areas of the second mould, respectively. The first mounting section comprises a first groove or a plurality of first grooves. Additionally or alternatively, the second mounting section comprises one second groove or a plurality of second grooves. The first groove and the second groove are formed with respect to each other such that both are facing each other, when the first mounting section and the second mounting section are facing each other. The seal element between the first mounting section and the second mounting section is positioned in one of the provided first and second grooves, preferably in the respective groove which is not directly adjacent to the inner volume. The seal element seals the inner volume from the environment so that a vacuum may be established into the inner volume for sucking resin into the inside of the first and second mould or for generating high pressure for pressing the first composite fiber layer against the first surface of the first mould.

According to a further exemplary embodiment of the present invention, the seal element comprises an inflatable sealing element. The method of the exemplary embodiment further comprises inflating the inflatable sealing element after bringing together the first mould and the second mould relatively to each other, such that the first mounting surface is spaced from the second mounting surface by the seal element. A further step of the method is removing the holding layer from the first layer until the holding layer is stored within a storage volume which is provided (e.g. by grooves or gaps in the respective mounting sections) between the seal element and the inner volume. The next step is deflating the inflatable sealing element until the first mounting section is laid onto the second mounting section.

The inflatable sealing element may be a tube with a base area of any shape, like star, squared, rectangular, oval, circular or rhombic, which enables the tube to seal the inner volume of the closed mould from the environment. Additionally the inflatable sealing element may be inflated by air.

The inflatable sealing element is inflated so that the first mounting section and the second mounting section are spaced from each other and a gap between the first mounting section and the second mounting section is formed which is sealed by the inflated inflatable sealing element. The gap between the first mounting section and the second mounting section may be the storage volume for the removed holding layer and may be formed between the seal element and the inner volume.

The holding layer is removed from the inner volume to allow the first composite fiber layer, the separation element and the second composite fiber layer to contact each other and to build the final composite material structure. The holding layer is removed until it is stored in the storage volume. Preferably, the magnetic roller of the holding layer may also rest in the storage volume which is located between the sealing element and the inner volume. After the holding layer is removed from the inner volume, the inflated inflatable sealing element is deflated to finally build the closed mould. Hence, the holding layer may be removed from the inner volume, so that no residual material rests within the final composite fiber structure and additionally the forming of a closed mould allows a closed molding process, in which persons and the environment are in general not exposed to potentially hazardous substances which may be used in the molding process.

According to a further exemplary embodiment of the present invention, an arrangement for manufacturing a single- or multi-cell composite material structure is presented. The arrangement comprises the first mould which is formed such that at least one first composite fiber layer is layable on a first surface of the first mould, a holding layer which comprises a magnetic element and a magnetic device which is able of generating a magnetic force acting onto the magnetic element of the holding layer.

After the step of deflating the inflatable sealing element so that the first mounting section is laid onto the second mounting section, a closed mould is provided. The manufacturing may now proceed with the infusion of resin and the curing. There may be used any of the common methods like for example vacuum resin transfer molding or similar.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematical view of the first mould according to an exemplary embodiment of the present invention;
Fig. 2 shows a schematical view of the second mould to which two separation elements are placed according to an exemplary embodiment of the present invention;
Fig. 3 shows a schematical view of the second mould and the first mould turned upside-down according to an exemplary embodiment of the present invention;
Fig. 4 shows a schematical view of the second mould and the first mould turned upside-down with the holding layer nearly pulled to the storage volume according to an exemplary embodiment of the present invention;
Fig. 5 shows a schematical view of the first mould and the second mould coupled together and forming the closed mould according to an exemplary embodiment of the present invention;
Fig. 6 shows a schematical view of the first mould according to another exemplary embodiment of the present invention;
Fig. 7 shows a schematical view of the second mould to which two separation elements are placed according to another exemplary embodiment of the present invention;
Fig. 8 shows a schematical view of the second mould and the first mould turned upside-down according to another exemplary embodiment of the present invention;
Fig. 9 shows a schematical view of the second mould and the first mould turned upside-down with the holding layer nearly pulled to the storage volume according to another exemplary embodiment of the present invention;
Fig. 10 shows a schematical view of the first mould and the second mould coupled together and forming the closed mould according to another exemplary embodiment of the present invention;
Fig. 11 shows a schematical view of a partial view of the storage volume defined by the first mould and the second mould spaced apart of each other comprising the grooves and the inflated inflatable sealing element according to a further exemplary embodiment of the invention;
Fig. 12 shows a partial view of the storage volume defined by the first mould and the second mould building the closed mould comprising the deflated inflatable sealing element and the magnetic element of the holding layer in the groove according to a further exemplary embodiment of the invention.

### Detailed Description

The illustrations in the drawings are schematic. It is noted that in different figures similar or identical elements are provided with the same reference signs.

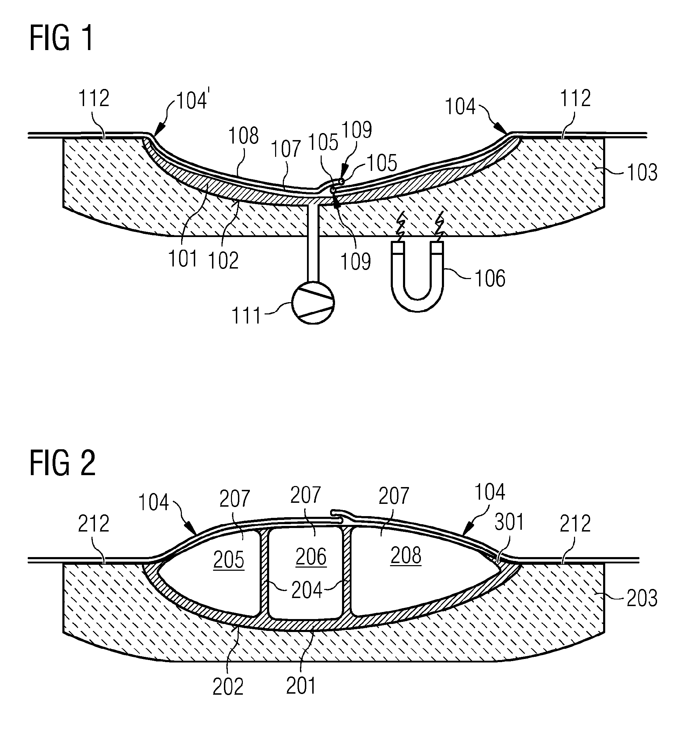

In Fig. 1 to Fig. 5, a method for manufacturing a single- or a multi-cell composite material structure according to an exemplary embodiment of the invention is shown.

**Fig. 1** shows a first mould 103. At least one first composite fiber layer 101 is laid out on a first surface 102 of the first mould 103. A holding layer 104 comprises a magnetic element 105 which is laid out on the first composite fiber layer 101. The magnetic element 105 is susceptible to magnetic forces. A magnetic device 106, such as a permanent magnet or an electrical magnet, generates a magnetic force which acts onto the magnetic element 105 of the holding layer 104. The magnetic device 106 is arranged with respect to the holding layer 104 such that a magnetic force generated by the magnetic device 106 presses the holding layer 104 against the first composite fiber layer 101 and the first surface 102 for holding the first composite fiber layer 101 on the first surface 102 during processing the first composite fiber layer 101 for forming the single- or multi-cell composite material structure.

Thefirst mould comprises the magnetic device 106 and a first air pump 111 which is able of providing a vacuum inside the inner volume. The air pump may 111 may pump air out of the inner volume through a duct formed within the first mould 103.

The holding layer 104 is formed two-sided by having a first layer section 107, a second layer section 108 and an interface section 109 between the first layer section 107 and the second layer section 108. The interface section 109 forms a half-loop. The first layer section 107 overlaps at least partially the second layer section 108. The magnetic element 105 is arranged in the interface section 109, such that the interface section 109 envelops partially the magnetic element 105 when the half-loop is formed. The magnetic element 105 comprises for example a roller element. The holding layers 104 in Fig. 2 to Fig. 4, Fig. 6 to Fig. 9, Fig. 11 and Fig. 12 may be formed similar to those in Fig. 1 and may hence comprise a respective magnetic element 105 which is arranged in a respective section 109, such that the interface section 109 envelops partially the magnetic element 105 when the half-loop is formed.

As can be taken in Fig. 1, a further holding layer 104' is provided. The holding layers 104 which are shown in Fig. 1 may be designed identical. Furthermore, the further holding layer 104' and the holding layer may overlap at least partially.

The first layer section 107 of the holding layer 104 is laid out onto the first composite fiber layer 101.

**Fig. 2** shows a second mould 203. At least one second composite fiber layer 201 is laid out on a second surface 202 of the second mould 203. There are two separation elements 204 connected to the second composite fiber layer 201. Between the two separation elements 204 and the second composite fiber layers 201 a first sub volume 205, a second sub volume 206 and a third sub volume 208 are formed which form hollow regions in the final multi-cell composite material structure.

The two holding layers 104 are laid out onto three inner moulds 207 which may be arranged within the respective sub volumes 205, 206, 208.

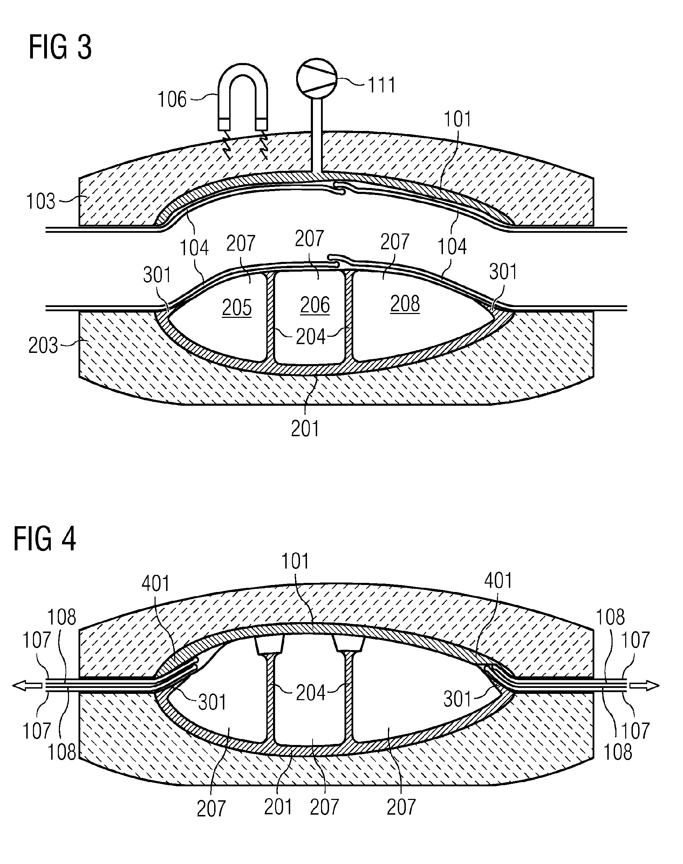

**Fig. 3** shows the first mould 103 and the second mould 203 in a subsequent further method step. The first mould 103 is turned upside-down while the air pump 111 is activated which sucks the air out between the holding layers 104 and the first mould 103 and the magnetic device generates magnetic force and in unison these hold the first composite fiber layers 101 pressed against the first mould surface 102. The magnetic force acting on the magnetic element 105 especially makes sure that the overlapping of the holding layers 104 remains air tight so that the vacuum force on the first composite layers 101 is maintained. The second composite fiber layer 201 comprises second contact regions 301 which are folded upwardly onto the adjacent inner moulds 207.

**Fig. 4** shows the first mould 103 and the second mould 203 in another step of the method. The holding layers 104 are pulled almost out of the inner volume. The first composite fiber layer 101 comprises a first contact section 401, which is formed for being fixed to the second contact section 301. The three separation elements 204 are coming in contact with the second composite fiber layer 201.

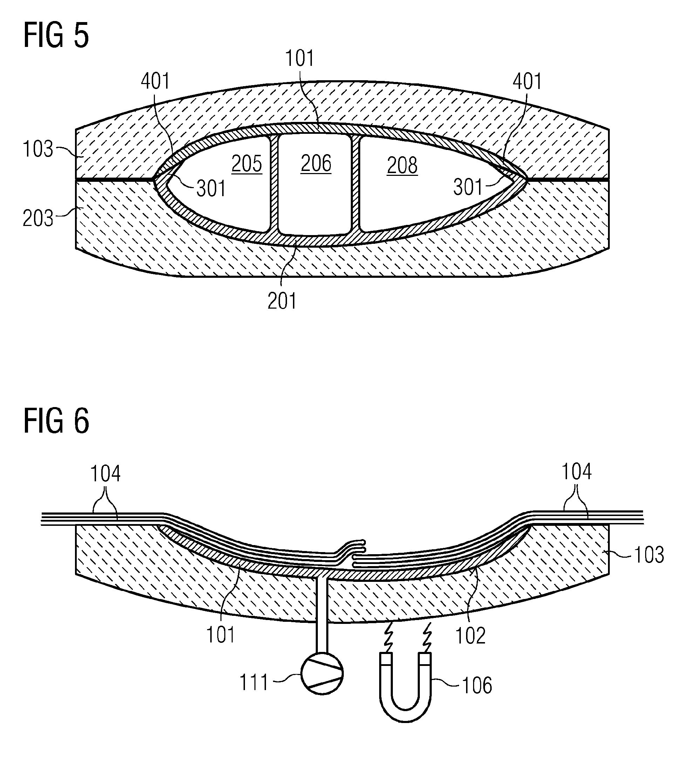

**Fig. 5** illustrates the closed mould which is built by the first mould 103 and the second mould 203. The first contact section 401 and the second contact section 301 are overlapping each other and may generate a strong connection in the final composite material structure. The closed mould may now be further processed with for example resin infusion and curing using any of the common methods like vacuum assisted resin transfer or similar.

In Fig. 6 to Fig. 10, a further method for manufacturing a single- or material structure according to an exemplary embodiment of the invention is shown.

**Fig. 6** shows also a first mould 103. The first mould 103 comprises a first air pump 111 and a magnetic device 106. The magnetic device 106 is able of generating a magnetic force which acts onto a magnetic element 105 of a holding layer 104. Also, the magnetic device 106 is arranged with respect to the holding layer 104 such that a magnetic force generated by the magnetic device 106 presses the holding layer 104 against the first composite fiber layer 101 and the first surface 102 for holding the first composite fiber layer 101 on the first surface 102 during processing the first composite fiber layer 101 for forming the single- or multi-cell composite material structure.

At least one composite fiber layer 101 is laid out on the first surface 102 of the first mould 103. Four holding layers 104 comprising each a magnetic element 105 in the shape of a roller element are laid out on the first composite fiber layer 101. The magnetic element 105 comprises a material which is susceptible to magnetic forces. Each of the four holding layers 104 is formed two-sided by having a first layer section 107, a second layer section 108 and an interface section 109 between the first layer section 107 and the second layer section 108. The interface section 109 forms a half-loop and the first layer section 107 overlaps at least partially the second layer section 108. The magnetic element 105 is arranged within the interface section 109 such that the interface section 109 envelops partially the magnetic element 105 when forming the half-loop. The first layer section 107 of two of the four holding layers 104 are laid out directly on the first composite fiber layer 101. The two holding layers 104 are laid out in such a way that the roller element of each of the two holding layers 104 are laid above each other approximately at the middle of the first mould 103. The two other holding layers 104 are laid out onto the two first holding layers 104 such that the magnetic elements 105 are also laid onto each other and onto the two first roller elements and such that the second layer section 108 of the two other holding layers 104 are laid out onto the second layer sections 108 of the two holding layers 104. The two layer sections 107 of the two other holding layers 104 are able to contact the second composite fiber layer 201 when the first mould 103 and the second mould 203 are brought together.

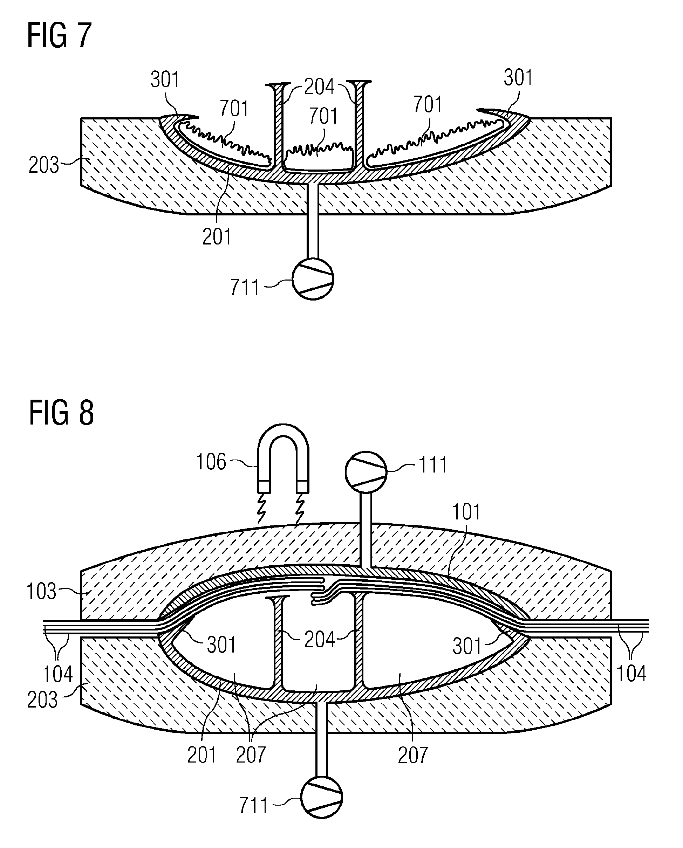

**Fig. 7** illustrates the second mould 203. At least one second composite fiber layer 201 is laid out onto the second surface 202 of the second mould 203. The second mould 203 in Fig. 7 also comprises a second air pump 711. On the second composite fiber layer 201 two separation elements 204 are provided. The two separation elements 204 are placed between the first surface 102 and the second surface 202. The inflatable bags 701 are laid out onto the second composite fiber layer 201. The inflatable bags 701 may form in this exemplary embodiment the inner moulds 207. The second composite fiber layer 201 comprises two second contact regions 301 at opposed edge sections. The second contact regions 301 are folded up onto the adjacent inflatable bags 701.

**Fig. 8** shows a further step of the method. The first mould 103 is turned upside-down and the first mould 103 and the second mould 203 are brought together relatively to each other such that the first mould 103 and the second mould 203 envelop an inner volume. The two separation elements 204 contacts at their lower end the second surface 202 and at their upper ends the holding layer 104 which are still in place for holding the first composite fiber layer 101 such that the inner volume is separated by the separation elements 204 into a first sub volume 205 forming the first cell, a second sub volume 206 forming the second cell and a third sub volume 208 forming the third cell of the multi-cell composite material structure.

The inflatable bags 701 are inflated by injecting air. The inflated inflatable bags 701 press the first composite fiber layer 101 against the first surface 102 and the second composite fiber layer 201 against the second surface 202. Also, an underpressure is provided by the air pumps 111 and 711 such that the first composite fiber layer 101 is further pressed against the first surface 102 and the second composite fiber layer 201 is further pressed against the second surface 202 by generating underpressure between the first composite fiber layer 101 and the first surface 102 and between the second composite fiber layer 201 and the second surface 202, respectively.

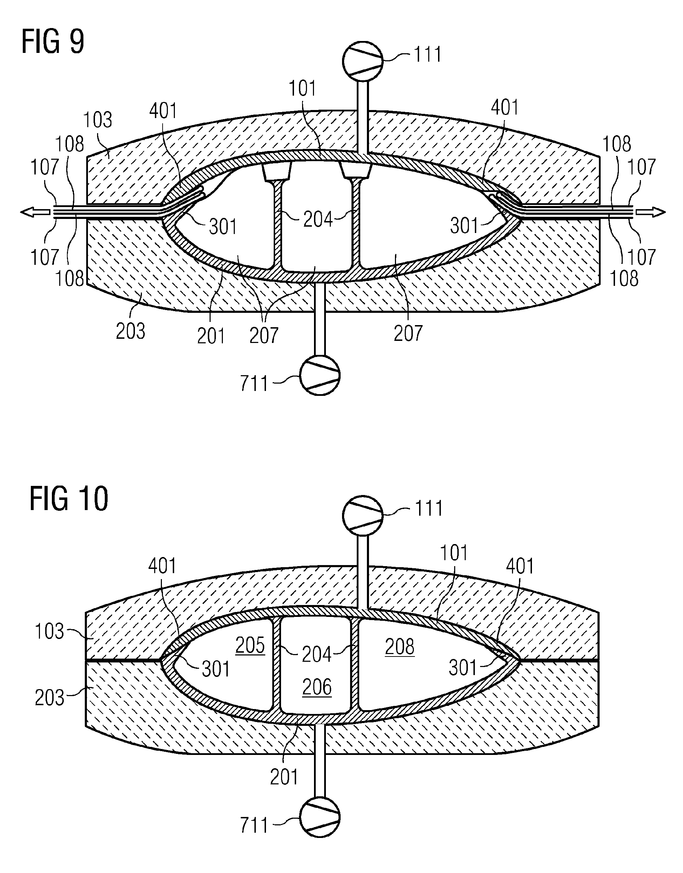

**Fig. 9** shows yet a further step of the method. In this step the four holding layers 104 are already slightly pulled out. The holding layers 104 are pulled out by pulling the second layer sections 108 of each of the four holding layers 104, wherein the second layer sections 108 are not in contact with the respective composite fibre layers 101, 201. As the holding layers 104 are pulled out, the separation elements 204 come in contact with the second composite fiber layer 201 and thus the first sub volume 205, second sub volume 206 and third sub volume 208 are formed.

The first mould 103 comprises two first mounting sections 112 and the second mould 203 comprises two second mounting sections 212, respectively. One of the first mounting section 112 faces the second mounting section 212 and the other first mounting section 112 faces the other second mounting section 212, respectively, when the first mould 103 and the second mould 203 are brought together.

**Fig. 10** illustrates a further step of the method. The first mould 103 and the second mould 203 are completely closed. The respective first mounting sections 112 and second mounting sections 212 are facing each other with direct physical contact. The first contact regions 401 of the first mould 103 and the respective second contact regions 301 of the second mould 203 are forming a robust connection.

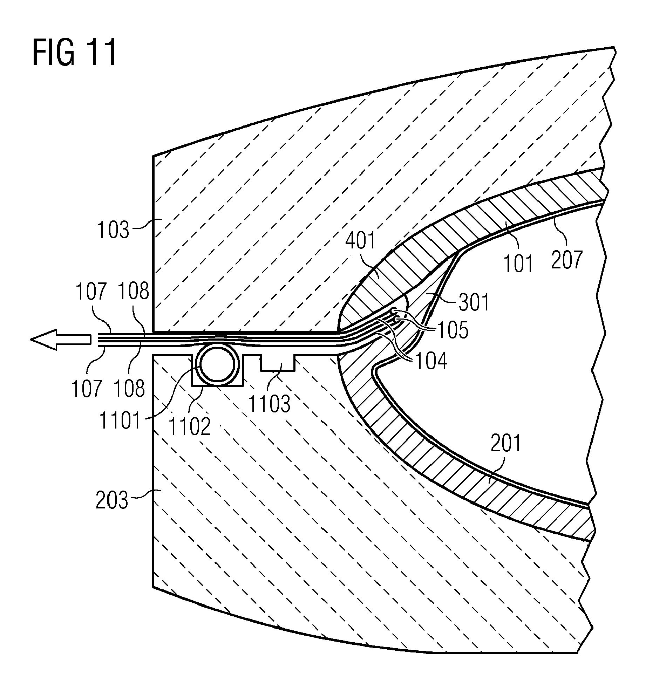

**Fig. 11** shows a partial view of one of the first mounting section 112 of the first mould 103 and the respective second mounting section 212 of the second mould 203 brought relatively together during pulling out two holding layers 104. The first contact region 401 of the first composite fiber layer 101 and the second contact region 301 of the second composite fiber layer 201 are already partially in contact forming a strong connection. A seal element 1101 between the first mounting section 112 of the first mould 103 and the second mounting section 212 of the second mould 203 seals the inner volume from the environment of the closed mould. The seal element 1101 comprises an inflatable sealing element 1101. The inflatable sealing element 1101 is inflated such that the first mounting section 112 is spaced from the second mounting section 212. A storage volume 1103 is formed between the inflated inflatable sealing element 1101 and the inner volume. In this exemplary embodiment the inflatable sealing element 1101 is provided in a first groove 1102 and the storage volume comprises a second groove 1104.

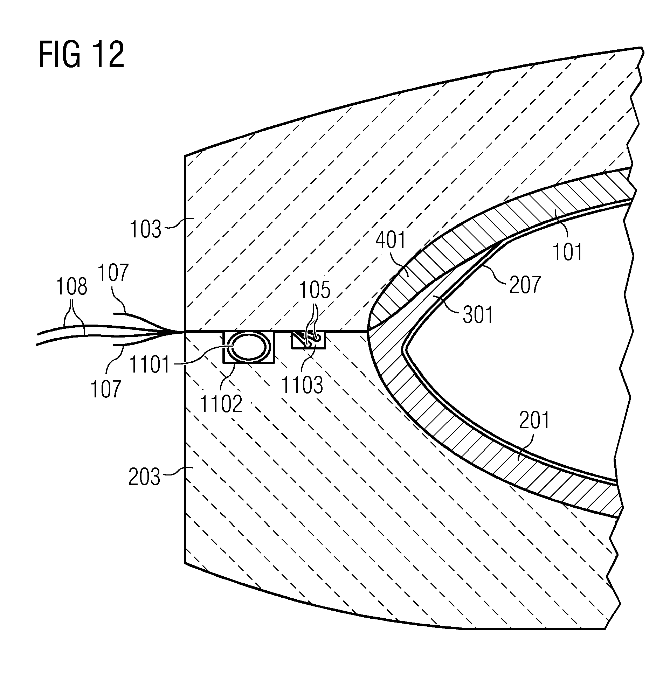

**Fig. 12** shows a partial view of a further step of the method. The first mould 103 and the second mould 203 are completely brought together such that the first mounting section 112 of the first mould 103 and the second mounting section 212 of the second mould 203 are in contact and the inner volume is sealed completely from the environment of the closed mould. Herein the holding layer 104 was removed from the first composite fiber layer 101 until the magnetic elements 105 of the holding layers 104 are stored in the storage volume 1103. The inflatable sealing element 1101 is completely deflated so that the first mounting section 112 is laid onto the second mounting section 212.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for manufacturing a single- or multi-cell composite material structure, the method comprising:
laying out at least one first composite fiber layer (101) on a first surface (102) of a first mould (103),
laying out a holding layer (104) comprising a magnetic element (105) on the first composite fiber layer (101), wherein the magnetic element (105) comprises a material which is susceptible to magnetic forces,
providing a magnetic device (106) for generating a magnetic force acting onto the magnetic element (105) of the holding layer (104),
wherein the magnetic device (106) is arranged with respect to the holding layer (104) such that a magnetic force generated by the magnetic device (106) presses the holding layer (104) against the first composite fiber layer (101) and the first surface (102) for holding the first composite fiber layer (101) on the first surface (102) during processing the first composite fiber layer (101) for forming the single- or multi-cell composite material structure.

2. Method according to claim 1,
wherein the holding layer is formed two-sided by having a first layer section (107), a second layer section (108) and an interface section (109) between the first layer section (107) and the second layer section (108),
wherein the interface section (109) forms a half-loop and the first layer section (107) overlaps at least partially the second layer section (108).

3. Method according to claim 2,
wherein the magnetic element (105) is arranged within the interface section (109), such that the interface section (109) envelops partially the magnetic element (105) when forming the half-loop.

4. Method according to claim 3,
wherein the magnetic element (105) comprises a roller element.

5. Method according to one of the claims 2 to 4,
wherein the first layer section (107) is laid onto the first composite fiber layer (101).

6. Method according to one of the claims 2 to 5, further comprising
removing the holding layer (104) by pulling the second layer section (108).

7. Method according to one of the claims 1 to 6, further comprising
laying out at least one second composite fiber layer (201) on a second surface (202) of a second mould (203),
turning the first mould (103) upside-down while the magnetic device (106) generates the magnetic force for holding the first composite fiber layer (101) on the first surface (102),
wherein the first composite fiber layer (101) comprises a first contact region (401),
wherein the second composite fiber layer (201) comprises a second contact region (301), and
bringing together the first mould (103) and the second mould (203) relatively to each other, such that the first mould (103) and the second mould (203) envelope an inner volume and the first contact region (401) contacts the second contact region (301).

8. Method according to claim 7, further comprising
placing at least one separation element (204) between the first surface (102) and the second surface (202) such that the inner volume is separated by the separation element (204) into a first sub volume (205) forming a first cell and a second sub volume (206) forming a second cell.

9. Method according to claim 7 or 8,
placing an inner mould (207) inside the inner volume, wherein the inner mould (207) presses the first composite fiber layer (101) against the first surface (102) and the second composite fiber layer (201) against the second surface (202).

10. Method according to claim 9,
removing the holding layer (104) after placing the inner mould (207) inside the inner volume.

11. Method according to claim 9 or 10,
wherein the inner mould (207) comprises a material block or an inflatable bag (701) which is inflatable by injecting air inside the bag.

12. Method according to one of the claims 7 to 11,
wherein the first composite fiber layer (101) is further pressed against the first surface (102) by generating underpressure between the first composite fiber layer (101) and the first surface (102).

13. Method according to one of the claims 7 to 12,
wherein the first mould (103) comprises a first mounting section (112) and the second mould (203) comprises a second mounting section (212),
wherein the first mounting section (112) and the second mounting section (212) are formed such that the first mounting section (112) faces the second mounting section (212) when the first mould (103) and the second mould (203) are brought together relatively to each other,
wherein the method further comprises
arranging a seal element (1101) between the first mounting section (112) and the second mounting section (212) for sealing the inner volume from an environment of the closed mould.

14. Method according to claim 13,
wherein the seal element (1101) comprises an inflatable sealing element (1101),
wherein a storage volume (1103) is formed between the seal element (1101) and the inner volume,
wherein the method further comprises
inflating the inflatable seal element (1101) after bringing together the first mould (103) and the second mould (203) relatively to each other such that the first mounting section (112) is spaced from the second mounting section (212),
removing the holding layer (104) from the first composite fiber layer (101) until the holding layer (104) is stored within the storage volume (1103), and
deflating the inflatable seal element (1101) until the first mounting section (112) is laid onto the second mounting section (212).

15. Arrangement for manufacturing a single or multi-cell composite material structure, the arrangement comprising:
a first mould (103) which is formed such that at least one first composite fiber layer (101) is layable on a first surface (102) of the first mould,
a holding layer (104) comprising a magnetic element (105),
wherein the holding layer (104) is formed such that the holding layer (104) is layable out on the first composite fiber layer (101),
wherein the magnetic element (105) comprises a material which is susceptible to magnetic force, and
a magnetic device (106) for generating a magnetic force acting onto the magnetic element (105) of the holding layer, wherein the magnetic device (106) is arranged with respect to the holding layer (104) such that a magnetic force which is generateable by the magnetic device (106) presses the holding layer (104) against the first surface (102) for holding the first composite fiber layer (101) onto the first surface (102) during processing the first composite fiber layer (101) for forming the single- or multi-cell composite material structure.
